(19) **Europäisches Patentamt / European Patent Office / Office européen des brevets**

(11) **EP 1 715 324 A1**

(12) **EUROPÄISCHE PATENTANMELDUNG**

(43) Veröffentlichungstag:
**25.10.2006 Patentblatt 2006/43**

(51) Int Cl.:
*G01N 21/17* *(2006.01)*

(21) Anmeldenummer: **05008349.2**

(22) Anmeldetag: **18.04.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Siemens Schweiz AG**
**8047 Zürich (CH)**

(72) Erfinder:
• **Forster, Martin, Dr.**
  **8645 Jona (CH)**
• **Pleisch, Rolf**
  **8604 Hegnau-Volketswil (CH)**
• **Steiner, Peter**
  **8645 Jena (CH)**
• **Tenchio, Georges, Dr.**
  **8123 Ebmatingen (CH)**

(54) **Optoakustische Messanordnung für den Nachweis von Gasen und/oder Aerosolen**

(57) Die optoakustische Messanordnung (BM) für den Nachweis von Gasen und/oder Aerosolen enthält ein als Mess- und Referenzzelle wirkendes Resonanzrohr (9), welches mit einem Mess- und einem Referenzmikrofon (3 bzw. 4), und mit mindestens einer Strahlungsquelle (10,11) zur modulierten Beaufschlagung des Resonanzrohrs (9) bestückt ist. Die Wellenlänge der von der mindestens einen Strahlungsquelle (10,11) ausgesandten Strahlung ist kleiner ist als 500 Nanometer und beträgt vorzugsweise zwischen 300 nm und 450 nm. Vorzugsweise sind zwei Lichtquellen, eine erste Lichtquelle (1) und eine zweite Lichtquelle (11) vorgesehen, von denen die erste Lichtquelle (10) Strahlung im Wellenlängenbereich von 200 bis 500 nm zum Nachweis von weissem und schwarzem Rauch und die zweite Lichtquelle (11) Strahlung im Wellenlängenbereich von 3.0 bis 4.8 µm zum Nachweis von brennbaren Substanzen oder gefährlichen Gasen emittiert.

FIG. 5

EP 1 715 324 A1

## Beschreibung

Die vorliegende Erfindung betrifft eine optoakustische Messanordnung für den Nachweis von Gasen und/oder Aerosolen mit einer Mess- und Referenzzelle, welche durch mindestens ein mindestens einseitig offenes Resonanzrohr gebildet sind, mit diesem zugeordneten Mikrofonen, an welche eine Auswerteelektronik angeschlossen ist, und mit einer Strahlungsquelle zur modulierten Beaufschlagung der Messzelle.

Beim optoakustischen oder fotoakustischen Effekt wird durch die Bestrahlung eines zu detektierenden Gases durch moduliertes Licht eine akustische Druckwelle verursacht, deren Grösse in direktem Verhältnis zur Konzentration des betreffenden Gases steht. Die akustische Druckwelle entsteht deswegen, weil das Gas die Lichtstrahlung absorbiert und sich dadurch erwärmt. Daraus resultiert eine thermische Ausdehnung und, entsprechend der Modulation der Lichtstrahlung, eine periodische Druckschwankung. Die beiden Zellen werden in der Regel als Mess- und Referenzzelle bezeichnet, und die Messanordnung ist so ausgebildet, dass entweder die Zellen voneinander getrennt sind und die Strahlung beide Zellen durchsetzt (C. F. Dewey, Jr. : Opto-acoustic Spectroscopy and Detection, [Y. H. Pao, ed.], Academic Press, New York, 1977, 47-77) oder die Zellen miteinander verbunden sind und die Strahlung nur die Messzelle durchsetzt (G. Busse and D. Herboeck: Differential Helmholtz resonator as an opto-acoustic detector, Applied Optics, Vol 18, No. 23, 3959).

Beim Nachweis von Aerosolen verhält es sich ähnlich, auch diese absorbieren die modulierte Strahlung, wodurch modulierte Wärme und von dieser modulierter Druck erzeugt wird. Bisher beschriebene optoakustische Sensoren für die Messung von Aerosolen sind meistens Monosensoren mit nur einer Messzelle. Wenn für die Aerosolmessung Sensoren mit zwei Zellen, sogenannte Dualsensoren mit einer Mess- und einer Referenzzelle vorgeschlagen werden, dann sind diese so aufgebaut, dass die Referenzzelle gegen Aerosol abgeschirmt ist. Letzteres wird dadurch erreicht, dass die Luft gefiltert wird, bevor sie in die Referenzzelle gelangt. Ausserdem wird auf die starke Temperaturabhängigkeit der Resonanzfrequenz hingewiesen, welche eine Korrektur der Signalgrösse erfordert. Bei Anwendung des Dual-Prinzips liegt die Nachweisempfindlichkeit optoakustischer Sensoren für Gase oder Aerosole im Bereich derjenigen von optischen Rauchmeldern.

Da die optoakustischen Signale durch Absorption und nicht durch Streuung erzeugt werden, könnten mit dem optoakustischen Prinzip sowohl grosse und auch kleinste Aerosole bis unterhalb des $\mu$-Bereichs detektiert und helle und dunkle Raucharten könnten etwa gleich gut gemessen werden. Trotzdem wird bisher das optoakustische Prinzip zur Rauchdetektion nicht verwendet, was hauptsächlich durch den für die Luftfilterung und die Korrektur der Signalgrösse erforderlichen zusätzlichen Aufwand bedingt ist.

In der WO 02/31475 ist eine optoakustische Messanordnung der eingangs genannten Art beschrieben, welche mehrere Resonanzrohre ausweist und zur Rauchdetektion verwendet werden kann. Durch die Erfindung soll nun eine optoakustische Messanordnung angegeben werden, die bezüglich Detektionssicherheit, Zuverlässigkeit und Kosten mit einem Streulichtmelder konkurrenzfähig ist, und ausserdem möglichst kleine Dimensionen aufweist und daher auch in einem historischen Gebäude nicht als störend empfunden wird.

Der Einsatz als Brandmelder ist nicht zuletzt deswegen interessant, weil eine optoakustische Messanordnung nicht erst alarmiert, wenn es schon brennt, sondern schon das Vorhandensein brennbarer Substanzen in der Luft anzeigen kann. Da die jüngste Generation von Streulichtrauchmeldern, beispielsweise die Melder des Typs "Sinteso" der Siemens Schweiz AG ("Sinteso" - eingetragenes Warenzeichen der Siemens Schweiz AG) sich unter anderem dadurch auszeichnet, dass sie schwarzen und weissen Rauch, also offene Brände und Schwelbrände gleich gut detektiert (siehe dazu die europäische Patentanmeldung Nr. 04 023 740.6 der Siemens Schweiz AG vom 06.10.2004), soll die durch die vorliegende Erfindung zu schaffende optoakustische Messanordnung insbesondere Schwelbrände und offene Brände gut und sicher detektieren können.

Die gestellte Aufgabe wird erfindungsgemäss dadurch gelöst, dass die Wellenlänge der von der Strahlungsquelle ausgesandten Strahlung kleiner ist als 500 Nanometer. Die bei bekannten optoakustischen Messanordnungen verwendeten Strahlungsquellen sind durchwegs Laser oder LED's, die Licht im infraroten oder im sichtbaren Bereich aussenden, beispielsweise Infrarotstrahlung im Bereich von 3.4 $\mu$m. Praktische Untersuchungen haben gezeigt, dass im Infrarotbereich praktisch alle Raucharten weniger stark absorbieren als im sichtbaren Bereich und dass Schwelbrände sehr selektive Absorptionen zeigen, so dass im gesamten Infrarotbereich, auch im nahem Infrarot, die Ansprechempfindlichkeit auf offene Brände und Schwelbrände sehr unterschiedlich ist.

Überraschenderweise wurde gefunden, dass für den Nachweis von Rauch aus Schwelbränden bei einer Wellenlänge kleiner als 550 nm gemessen werden muss, und dass bei diesen Wellenlängen eine gleichmässige Ansprechempfindlichkeit auf hellen und dunklen Rauch gegeben ist.

Eine erste bevorzugte Ausführungsform der erfindungsgemässen Messanordnung ist dadurch gekennzeichnet, dass die genannte Wellenlänge zwischen 300 nm und 450 nm beträgt. Dieser Wellenlängenbereich hat den Vorteil, dass einerseits Ultraviolett LED's und Laser für diesen Bereich kommerziell erhältlich sind, und andererseits Wassernebel in Küchen oder Badezimmern die Messanordnung nicht stört, weil dieser optoakustisch nur bei Wellenlängen unterhalb von 200 nm nachgewiesen werden kann.

Eine zweite bevorzugte Ausführungsform der erfindungsgemässen Messanordnung ist dadurch gekennzeichnet, dass die Mess- und die Referenzzelle durch ein gemeinsames Rohr gebildet sind, welches mit einem Mess- und einem Referenzmikrofon bestückt ist. Das sowohl die Messals auch die Referenzzelle bildende gemeinsame Rohr ermöglicht eine miniaturisierte Bauweise der Messanordnung, die mit Recht als kleinster Brandmelder der Welt bezeichnet werden kann.

Eine dritte bevorzugte Ausführungsform der erfindungsgemässen Messanordnung ist dadurch gekennzeichnet, dass das Resonanzrohr in azimutaler Resonanz betrieben wird und die beiden Mikrofone am Umfang des Resonanzrohres um 90° angebracht sind, wobei das Messmikrofon die azimutalen Schwingungen im Druckbauch und das Referenzmikrofon die azimutalen Schwingungen im Druckknoten misst, wenn die Grundfrequenz der azimutalen Schwingung des Resonanzrohres angeregt wird.

Eine vierte bevorzugte Ausführungsform der erfindungsgemässen Messanordnung ist dadurch gekennzeichnet, dass die beiden Mikrofone bidirektional ausgebildet sind, wobei die eine Seite ihrer Membran mit dem Innenraum des Resonanzrohres verbunden ist und die andere Seite mit einem ausserhalb des Resonanzrohres liegenden Raum, welcher keine oder nur wenig optoakustisch erzeugte Druckschwankungen enthält.

Eine fünfte bevorzugte Ausführungsform ist dadurch gekennzeichnet, dass das Resonanzrohr mit einer ersten Lichtquelle und einer zweiten Lichtquelle bestückt ist, welche parallel zur Achse des Resonanzrohres gerichtete Strahlung verschiedener Wellenlängen ausstrahlen, und dass die Strahlung der einen Lichtquelle bei der Position des Messmikrofons und die Strahlung der anderen Lichtquelle 180° davon beabstandet verläuft. Vorzugsweise emittiert die erste Lichtquelle Strahlung im Wellenlängenbereich von 200 bis 500 nm zum Nachweis von weissem und schwarzem Rauch und die zweite Lichtquelle Strahlung im Wellenlängenbereich von 3.0 bis 4.8 $\mu$m zum Nachweis von brennbaren Substanzen oder gefährlichen Gasen; die zweite Lichtquelle ist bei der Position des Messmikrofons angeordnet.

Eine weitere bevorzugte Ausführungsform der erfindungsgemässen Messanordnung ist dadurch gekennzeichnet, dass an dem mindestens einen offenen Ende des Resonanzrohres ein Schalldämpfer angeordnet ist. Der oder die Schalldämpfer dienen zur Dämpfung von Geräuschen aus der Umgebung der Messanordnung. Sie können resonant oder nicht resonant arbeiten und sie können Leitwände aufweisen oder eine geeignete aerodynamische Form haben, um die Umgebungsluft in das Resonanzrohr zu leiten.

Im Folgenden wird die Erfindung anhand von Ausführungsbeispielen und der Zeichnungen näher erläutert; es zeigt:

Fig. 1    eine schematische Darstellung eines aus dem Stand der Technik bekannten, einseitig offenen, resonanten, optoakustischen Dualsensors für Rauch und Gas,

Fig. 2    eine Prinzipdarstellung eines optoakustischen Brandmelders mit einem als Mess- und Referenzzelle wirkenden Resonanzrohr,

Fig. 3    eine erste Ausführungsform eines erfindungsgemässen Brandmelders mit vier Strahlungsquellen,

Fig. 4    einen schematischen Querschnitt durch den Brandmelder von Fig. 2; und

Fig. 5    einen schematischen Querschnitt durch eine zweite Ausführungsform eines erfindungsgemässen Brandmelders.

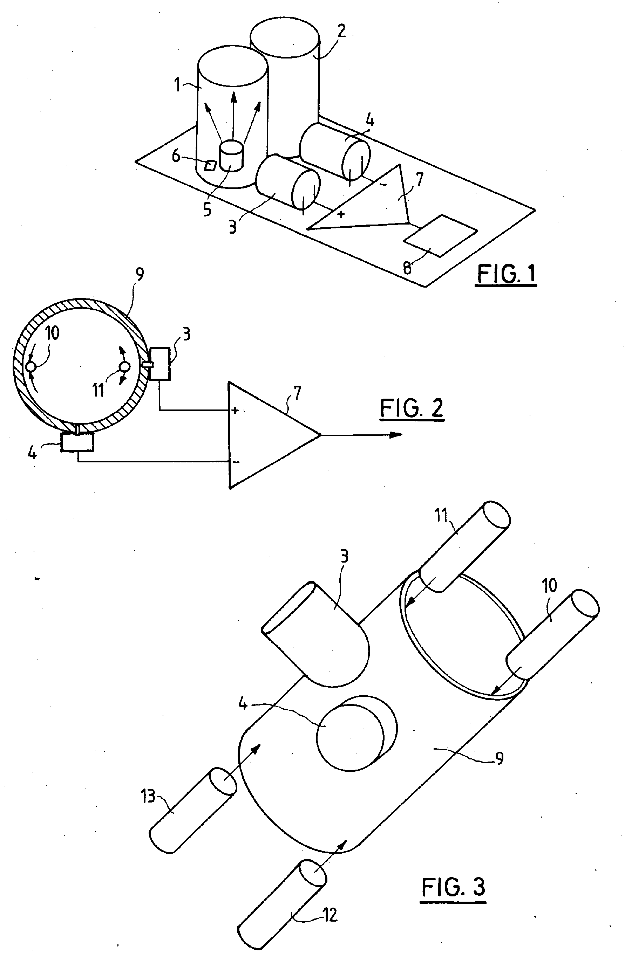

In Fig. 1 ist eine aus der WO-A-02/31475 bekannte Messanordnung dargestellt. Diese ist ein resonanter, einseitig offener Dualsensor mit einer rohrförmigen Messzelle 1 und einer rohrförmigen Referenzzelle 2, denen je ein Mikrofon 3 bzw. 4 zugeordnet ist. Ausserdem ist eine Strahlungsquelle 5, beispielsweise eine LED, vorgesehen, welche den Innenraum der Messzelle 1 mit Strahlung einer bestimmten Wellenlänge beaufschlagt. Neben der Strahlungsquelle 5 ist eine erste Fotozelle 6 zur Überwachung der Intensität der von der Strahlungsquelle 5 ausgesandten Strahlung angeordnet. Die Ausgänge der beiden Mikrofone 3 und 4 sind an einen Differenzverstärker 7 geführt, in welchem die Mikrofonsignale voneinander subtrahiert werden. Das Ausgangssignal des Differenzverstärkers 7 ist an einen phasenempfindlichen Gleichrichter (lock-in) 8 geführt.

Einseitig offene Rohre der Länge I haben eine Resonanzfrequenz $\upsilon_k$, die gegeben ist durch

$$\upsilon k = \frac{2k+1}{4l}c,$$

(k=0,1,2,3, ... ; c = Schallgeschwindigkeit in Luft)

Bei einer Länge I von 2 cm ergibt sich eine Resonanzfrequenz $\upsilon_0$ = 4.1 kHz; bei einem beidseitig offenen Rohr ist diese Resonanzfrequenz doppelt so gross. Im Rohr treten also stehende Wellen auf, wobei beim einseitig offenen Rohr am geschlossenen Ende ein Druckbauch (= Bewegungsknoten) und am offenen Ende ein Druckknoten (= Bewegungsbauch) auftritt. Beim beidseitig offenen Rohr befindet sich der Druckbauch in der Mitte des Rohres und je ein Bewegungsbauch an jedem offenen Ende.

Die Strahlungsquelle 5 strahlt moduliert in die Messzelle 1, wobei die Modulationsfrequenz der Strahlungsquelle 5 mit der Resonanzfrequenz der Messzelle übereinstimmt. Wenn die Messzelle 1 ein Aerosol enthält, dann absorbiert dieses die modulierte Strahlung, wodurch modulierte Wärme erzeugt wird. Die modulierte Wärme erzeugt modulierten Druck und dadurch Schall mit der Frequenz der Resonanzfrequenz der Messzelle 1, wodurch die Luftsäule in der Messzelle zu Schwingungen angeregt wird. Gleiches gilt bei Vorhandensein eines Gases in der Messzelle 1. Das Mikrofon 3, welches sich am Ort eines Druckbauches der stehenden Welle befindet, misst die Schwingungen (= Ton) im Rohr. Sobald das Mikrofon 3 einen Ton misst, welcher mit der Resonanzfrequenz der Messzelle 1 übereinstimmt, befindet sich in der Messzelle 1 ein Aerosol und/oder ein Gas.

Im Unterschied zu einem Streulicht-Rauchmelder spricht die dargestellte Messanordnung auf dunkle und helle Aerosole gleich gut an: Dunkle Aerosole ergeben ein grosses Signal, weil schon beim ersten Auftreffen der Strahlung der Strahlungsquelle 5 auf ein Teilchen viel Strahlungsleistung absorbiert wird. Und helle Aerosole ergeben ebenfalls ein grosses Signal, da die Strahlung an den hellen Teilchen mehrfach reflektiert und in Summe ebenfalls stark absorbiert wird. Ausserdem spricht der optoakustische Sensor sowohl auf grosse Aerosole als auch auf sehr kleine unterhalb des $\mu$-Bereichs an, da die optoakustischen Signale durch Absorption und nicht durch Streuung erzeugt werden.

Das Mikrofon 3 misst nicht nur die Resonanzschwingungen in der Messzelle 1, sondern auch alle Geräusche im Raum, was zu Störungen führen kann. Diese Störungen werden durch die Referenzzelle 2 und das Mikrofon 4 eliminiert. Da die Referenzzelle 2 nicht mit der Strahlung einer Strahlungsquelle beaufschlagt ist, kann das Mikrofon 4 auch keine von einer Strahlungsquelle hervorgerufenen Schwingungen messen, sondern misst ausschliesslich die Geräusche des Raumes. Die Signale des Referenzmikrofons 4 werden im Differenzverstärker 7 von den Signalen des Messmikrofons 3 subtrahiert, wodurch die Geräusche des Raumes eliminiert werden. Ebenfalls eliminiert werden Vibrationen, die auf beide Mikrofone gleich einwirken. Die beiden Zellen, Messzelle und Referenzzelle, können auch beidseitig offen sein.

Während die in Fig. 1 dargestellte Messanordnung in longitudinaler Resonanz (Längsschwingung) betrieben wird, werden die in den übrigen Figuren dargestellten und als Brandgefahrenmelder bezeichneten Messanordnungen in azimutaler Resonanz (Ringschwingung) betrieben. Fig. 2 zeigt eine schematische Prinzipdarstellung eines solchen Brandgefahrenmelders, der sich von der in Fig. 1 dargestellten Messanordnung zusätzlich noch dadurch unterscheidet, dass anstatt zweier Zellen, von denen die eine als Mess- und die andere als Referenzzelle wirkt, nur ein einziges Resonanzrohr 9 vorgesehen ist, welches sowohl als Messals auch als Referenzzelle wirkt. Für die azimutale Resonanz gilt, dass die Resonanzfrequenz in erster Näherung dem Kehrwert des Radius des Resonanzrohres 9 proportional ist.

Ausserdem sind zwei Strahlungsquellen vorgesehen, eine erste Strahlungsquelle 10, die Licht im ultravioletten bis sichtbaren Bereich bis zu einer Wellenlänge von maximal 500 nm aussendet, und eine zweite Strahlungsquelle 11, die Licht im Infrarotbereich im Wellenlängenbereich von etwa 2 bis 4 $\mu$m aussendet. Beide Strahlungsquellen 10 und 11 sind durch LED's gebildet. Die erste Strahlungsquelle 10 dient zur Detektion von Rauch, die zweite Strahlungsquelle 11 zur Detektion von gefährlichen, insbesondere brennbaren Substanzen.

Bei einer Wellenlänge der ersten Lichtquelle 10 von 200 bis 500 nm, optimal von 300 bis 450 nm, sind die optoakustischen Signale von weissem und schwarzem Rauch ungefähr gleich gross. Eine Substanz wird nur dann als Aerosol, Nebel oder Gas optoakustisch nachgewiesen, wenn sie die Strahlung der Lichtquelle absorbiert. Daher ist der dargestellte Brandgefahrenmelder unempfindlich gegenüber Wasserdampf, da Wasser im Wellenlängenbereich von 200 bis 850 nm praktisch nicht absorbiert. Diese Eigenschaft ist wichtig für die Verwendung des Brandgefahrenmelders in Küchen oder Hotelzimmern, wo es bei konventionellen Brandmeldern wegen Wasserdampf aus dem Badezimmer immer wieder zu Fehlalarmen kommt.

Die beiden Lichtquellen 10 und 11 werden entweder mit gleicher Frequenz zeitlich abwechselnd oder mit verschiedenen Frequenzen dauernd betrieben. Im ersten Fall werden die während der Betriebsdauer einer Lichtquelle erzeugten Signale für jede Lichtquelle separat ausgewertet. Während der Zeit, in der eine Lichtquelle nicht betrieben wird, wird der letzte Wert des von dieser Lichtquelle erzeugten Signals entweder gespeichert und als konstant angesehen, oder er zerfällt nach dem $e^{\alpha t}$-Gesetz. Werden n Lichtquellen eingesetzt, werden sie analog je nur während 1/n der Gesamtzeit betrieben. Im zweiten Fall werden die Frequenzen der Lichtquellen so festgelegt, dass sie entweder nahe bei der Grundfrequenz des Resonanzrohres liegen, oder bei der Grundfrequenz der 1., 2. bis (n-1)ten Harmonischen.

Die beiden Mikrofone, Messmikrofon 3 und Resonanzmikrofon 4, sind um 90° versetzt an der Wand des Resonanzrohres 9 angebracht und messen so bei Anregung der Grundfrequenz der azimutalen Schwingung des Resonanzrohres 9 die azimutalen Schwingungen einmal im Druckbauch (Messmikrofon 3) und einmal im Druckknoten (Referenzmikrofon 4). Um das zu ermöglichen, sind die beiden Lichtquellen 10 und 11 so an einem oder beiden Enden des Resonanzrohres 9 angeordnet, dass ihre Strahlung im Resonanzrohr 9 entweder bei der Position des Messmikrofons 3 oder 180° davon entfernt verläuft. Darstellungsgemäss verläuft das Licht der zweiten Lichtquelle 11 parallel zur Achse des Resonanzrohres 9 beim Messmikrofon 3 und das Licht der ersten Lichtquelle 10 parallel zur Achse des Resonanzrohres 9 180° gegenüber dem Messmikrofon 3. Die Signale des Messmikrofons 3 und des Referenzmikrofons 4 werden voneinander subtrahiert, wodurch Störsignale eliminiert werden. Eine weitere Elimination von Störsignalen kann dadurch erfolgen, dass die Phase des Signals des Referenzmikrofons 4 so lange variiert wird, bis man am Ausgang des Differenzverstärkers 7 ein minimales rms-Signal erhält. Dann enthält das Nutzsignal den kleinstmöglichen Anteil an Störsignal.

Die beiden Mikrofone 3 und 4 sind entweder unidirektionale oder bidirektionale Mikrofone. Im letzteren Fall ist die eine Seite der Mikrofonmembran mit dem Innenraum des Resonanzrohres 9 verbunden und die andere Seite mit einem Raum, der ausserhalb des Resonanzrohres 9 liegt und wenig oder gar keine optoakustisch erzeugten Druckschwankungen enthält. Vorzugsweise werden Mikrofone der in Mobiltelefonen verwendeten Art eingesetzt.

Gemäss Fig. 3 ist das Resonanzrohr 9 mit vier Lichtquellen 10, 11, 12 und 13 bestückt, welche Licht verschiedener Wellenlängen ausstrahlen. Die erste Lichtquelle 10 emittiert Strahlung im Wellenlängenbereich von 200 bis 500 nm zum Nachweis von weissem und schwarzem Rauch, die zweite Lichtquelle 11 emittiert Strahlung im Wellenlängenbereich von 3.0 bis 3.6 $\mu$m zum Nachweis von brennbaren Substanzen, die dritte Lichtquelle 12 emittiert Strahlung im Wellenlängenbereich von 4.18 bis 4.38 $\mu$m zum Nachweis von $CO_2$ und die vierte Strahlungsquelle 13 emittiert Strahlung im Wellenlängenbereich von 4.50 bis 4.85 $\mu$m zum Nachweis von CO. Es sei noch erwähnt, dass mit Strahlung im Wellenlängenbereich von 0.7 bis 1.2 $\mu$m schwarzer Rauch nachgewiesen werden kann, so dass man durch Kombination einer LED mit Strahlung von 0.38 $\mu$m mit einer LED mit Strahlung von 0.8 $\mu$m durch Bestimmung des Verhältnisses der beiden Signale die Rauchart unterscheiden kann. An jedem der beiden Enden des Resonanzrohres 9 sind je zwei Strahlungsquellen 10, 11 beziehungsweise 12, 13 angeordnet und zwar jeweils zwei Strahlungsquellen längs einer Parallelen zur Längsachse des Resonanzrohres 9.

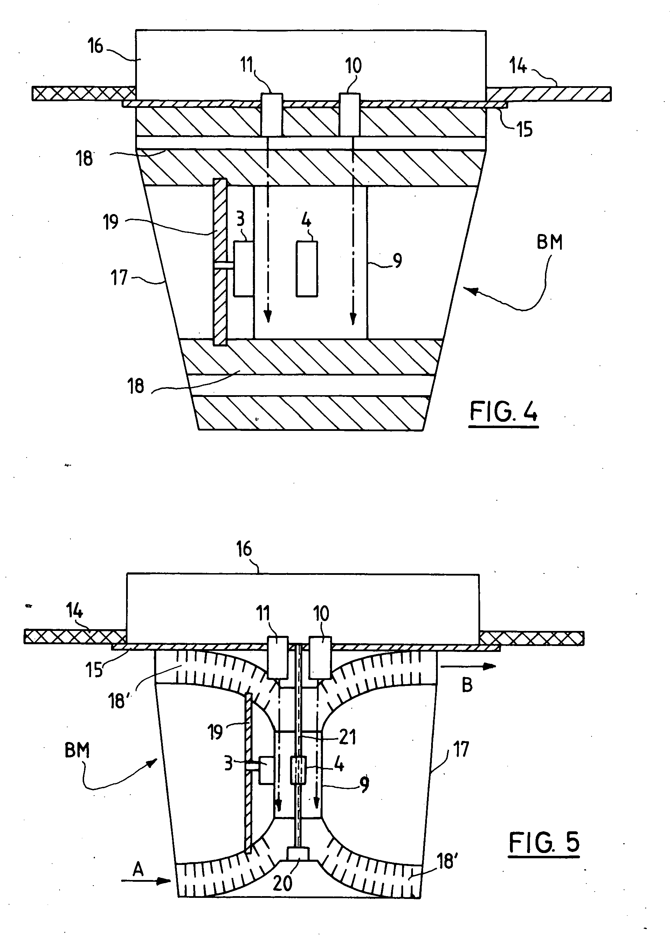

Fig. 4 zeigt einen Axialschnitt durch einen an der Decke 14 eines Raumes montierten Brandgefahrenmelder BM. Dieser umfasst im Wesentlichen eine Melderelektronik 16, welche die bisher beschriebenen Komponenten Messmikrofon 3, Referenzmikrofon 4, Resonanzrohr 9, zwei Strahlungsquellen 10 und 11 sowie eine diese Komponenten umgebende gehäuseartige Abdeckung 17 trägt und den Differenzverstärker 7 und den Gleichrichter 8 (Fig. 1) sowie die erforderlichen Bauteile und Anschlüsse für Stromversorgung und Kommunikation umfasst. An der mit der Decke 14 abschliessenden unteren Seite der Melderelektronik 16 ist eine mit dem Bezugszeichen 15 bezeichnete Abdeckplatte eingeschoben, die vorzugsweise farblich an die Decke 14 angepasst ist und die Melderelektronik 16 nach unten, gegen den überwachenden Raum hin, abdeckt.

Wie Fig. 4 weiter zu entnehmen ist, sind auf die beiden offenen Enden des Resonanzrohres 9 Schalldämpfer 18 für die Dämpfung von Geräuschen aus der Umgebung des Brandgefahrenmelders BM aufgesetzt. Die Schalldämpfer 18 können resonant oder nicht resonant arbeiten, wobei resonant bedeutet, dass sie im Bereich der Resonanzfrequenz stark dämpfen, und sie können mit oder ohne schallabsorbierende Materialien ausgebildet sein. Mit dem Bezugszeichen 19 ist eine für jedes Mikrofon 3, 4 vorgesehene akustische Verbindung bezeichnet, die ausserhalb und etwas neben den Enden des Resonanzrohres 9 in den Schalldämpfern 18 endet. Wenn die Mikrofone 3 und 4 bidirektionale Mikrofone sind, dann hört die zweite Seite der Mikrofonmembran mit der akustischen Verbindung 19 ins Freie und zwar möglichst an einem Ort, wo äusserer Schall im Gebiet der Resonanzfrequenz durch die Schalldämpfer 18 schon stark gedämpft ist, wo aber andererseits keine optoakustischen Druckänderungen existieren, da die akustische Verbindung 19 ausserhalb des Resonanzrohres 9 liegt und mit den Schalldämpfern 18 verbunden ist.

Äusserer Störschall mit einer weit neben der Resonanzfrequenz liegenden Frequenz gelangt durch den resonanten Schalldämpfer 18 ungedämpft ins Innere des Resonanzrohres 9 und dort auf die Innenseite der Mikrofonmembran und andererseits über die akustische Verbindung 19 auf die Aussenseite der Mikrofonmembran und hebt sich somit auf und erzeugt im Mikrofon nur kleine bis sehr kleine Signale. Andererseits wird durch den resonanten Schalldämpfer äusserer Störschall im Bereich des Resonanzfrequenz des Resonanzrohrs 9 wirkungsvoll unterdrückt und gelangt weder auf die Innen- noch auf die Aussenseite der Mikrofonmembran. Bezüglich der akustischen Verbindung 19 ist wichtig, dass diese die Aussenseite der Mikrofonmembran mit einer Stelle im Inneren des resonanten Schalldämpfers 18 verbindet.

Die resonanten Schalldämpfer 18 können als radiale oder axiale $\lambda$/4- Schalldämpfer ausgebildet sein und die verschiedensten Formen aufweisen; beispielsweise können sie scheiben- oder trichterförmig ausgebildet sein. Die Schalldämpfer 18 können ausserdem Leitwände enthalten, welche die Umgebungsluft ins Innere des Resonanzrohres 9 leiten, oder sie können zu diesem Zweck geeignete aerodynamisch günstige Formen aufweisen.

Fig. 5 zeigt einen Axialschnitt durch einen Brandgefahrenmelder BM mit aerodynamisch ausgebildeten Schalldämpfern 18' und mit einem Temperaturfühler 20. Die Schalldämpfer 18' haben eine pilz- oder trichterartige Form und sind auf die beiden Enden des Resonanzrohrs 9 aufgesetzt. Die den nachzuweisenden Rauch und/oder die nachzuweisenden Substanzen enthaltende Luft steigt nach oben an die Decke 14, strömt in Richtung des Pfeils A in den unteren Schalldämpfer 18' und durch diesen in des Resonanzrohr 9 und verlässt dem Brandgefahrenmelder durch den oberen Schalldämpfer 18' in Richtung des Pfeils B.

Der Temperaturfühler 20 dient zur Korrektur der temperaturabhängigen Resonanzfrequenz in der Elektronik 16. Ausserdem kann die Temperaturinformation analog wie bei einem thermischen oder optisch/thermischen Brandmelder für den Brandnachweis verwendet werden. Aus Symmetriegründen ist der Temperaturfühler 20 in der Verlängerung der Symmetrieachse des Brandgefahrenmelders BM angeordnet und über ein dünnes, die Zuleitung zum Temperaturfühler 20 enthaltendes Rohr 21 mit der Melderelektronik verbunden.

Die Abdeckung 17, die Schalldämpfer 18, 18', das Resonanzrohr 9 und die akustische Verbindung 19 des Brandgefahrenmelders BM bestehen vorzugsweise aus durchsichtigem Material und die Abdeckplatte 15 ist an die Decke 14 farblich angepasst, so dass der Brandgefahrenmelder BM nur wenig stört und sich an seinen Untergrund anpasst. Der bei Brandmeldern übliche Alarmindikator zur optischen Alarmanzeige kann als SMD-LED direkt auf der Leiterplatte der Elektronik 16 platziert werden, wobei die Abdeckplatte 15 am Ort des Alarmindikators eine Ausnehmung aufweist, so dass der Alarmindikator von allen Seiten gut sichtbar ist.

Die Abdeckplatte 15 wird erst unmittelbar vor der Montage des Brandgefahrenmelders BM an der Decke in diesen eingeschoben. Entsprechend der Farbe der Decke 14 wird eine farblich angepasste Abdeckplatte 15 verwendet, die aus praktischen Gründen aus mehr als nur einem Stück bestehen kann.

Es ist auch möglich, den Brandgefahrenmelder BM mit anderen Sensoren, beispielsweise Gassensoren, zu kombinieren, die im Zentrum der Schalldämpfer 18' auf der Leiterplatte der Elektronik 16 so platziert werden, dass sie durch die Abdeckplatte 15 hindurch bis knapp in den freien Raum des oberen Schalldämpfers 18' reichen. In diesem Fall könnte man gegebenenfalls auf die zweite Lichtquelle 11 verzichten und für die Detektion brennbarer oder gefährlicher Gase den genannten Gassensor verwenden. Der zusätzliche Gassensor kann ein Metalloxid-, elektrochemischer oder sonstiger Gassensor sein. Durch seine Anordnung im Zentrum der Schalldämpfer 18' ist die Ansprechempfindlichkeit des Melders auf das betreffende Gas unabhängig von der Anströmrichtung der Umgebungsluft auf den Melder.

Das Licht der ersten Lichtquelle 10, welches zum Nachweis von Rauch dient, kann zur Anzeige der Funktionsfähigkeit des Gefahrenmelders verwendet werden, indem an der Unterseite der Abdeckung am Ort des Austritts der Strahlung der ersten Lichtquelle aus dem Melder ein Kleber mit einer phosphoreszierenden oder fluoreszierenden Substanz angebracht wird. Zur Ermöglichung der Bestimmung von Temperaturdifferenzen können zwei Temperaturfühler vorgesehen sein, zusätzlich zum Temperaturfühler 20 noch ein zweiter Temperaturfühler, der beispielsweise auf der Leiterplatte platziert wird. Die Zuleitung zum Temperaturfühler 20 könnte auch ausserhalb des Resonanzrohres 9 geführt werden, so dass das Rohr 21 ausserhalb des Resonanzrohres 9 verlaufen würde.

Der dargestellte Brandgefahrenmelder BM hat die folgenden Vorteile:

- Die beiden Alarmarten "Brandgefahr" (es könnte brennen) und "Brand" werden durch ein und denselben Melder erzeugt, mit dem ausserdem noch weitere gefährliche Substanzen nachgewiesen können.
- Die verschiedenen Alarmarten können schon im Melder logisch verknüpft werden, was die Auswertung in der Zentrale stark vereinfacht. Ausserdem wird im Unterschied zu bisher mit getrennter Brand- und Gaszentrale nur noch eine einzige Alarmzentrale benötigt.
- Es werden alle Raucharten mir etwa gleicher Empfindlichkeit nachgewiesen.

- Wegen der Verwendung einer transparenten Abdeckung und weiterer transparenter Teile und einer farblich an die Decke angepassten Abdeckplatte ist der Melder praktisch unsichtbar.
- Da die Abdeckplatte auswechselbar ist, können mit einer einzigen Farbvariante des Brandgefahrenmelders und verschiedenen Farbvarianten der Halteplatte die Brandgefahrenmelder an allen möglichen Farbvarianten der Decke praktisch unsichtbar montiert werden.
- Die Anpassung der Abdeckplatten an verschiedenfarbige Decken ist einfach vorzunehmen und auch kostengünstig, weil die Abdeckplatten kostengünstig herstellbar sind.
- Es sind keine Fehlalarme durch Wassernebel/Wasserdampf möglich.
- Störschall wird wirkungsvoll unterdrückt.
- Geringer Verbrauch an elektrischer Leistung.
- Der von der Decke vorragende Teil des Melders kann prinzipiell sehr kleine gehalten werden.

**Patentansprüche**

1. Optoakustische Messanordnung für den Nachweis von Gasen und/oder Aerosolen mit einer Mess- und Referenzzelle, welche durch mindestens ein mindestens einseitig offenes Resonanzrohr gebildet sind, mit diesem zugeordneten Mikrofonen, an welche eine Auswerteelektronik (7, 8, 16) angeschlossen ist, und mit einer Strahlungsquelle zur modulierten Beaufschlagung der Messzelle, **dadurch gekennzeichnet, dass** die Wellenlänge der von der Strahlungsquelle ausgesandten Strahlung kleiner ist als 500 Nanometer.

2. Optoakustische Messanordnung nach Anspruch 1, **dadurch gekennzeichnet, dass** die genannte Wellenlänge zwischen 300 nm und 450 nm beträgt.

3. Optoakustische Messanordnung nach Anspruch 2, **dadurch gekennzeichnet, dass** die Mess- und die Referenzzelle durch ein gemeinsames Resonanzrohr (9) gebildet sind, welches mit einem Mess- und einem Referenzmikrofon (3 bzw. 4) bestückt ist.

4. Optoakustische Messanordnung nach Anspruch 3, **dadurch gekennzeichnet, dass** das Resonanzrohr (9) in azimutaler Resonanz betrieben wird und die beiden Mikrofone (3, 4) am Umfang des Resonanzrohres (9) um 90° versetzt angebracht sind, wobei das Messmikrofon (3) die azimutalen Schwingungen im Druckbauch und das Referenzmikrofon (4) die azimutalen Schwingungen im Druckknoten misst, wenn die Grundfrequenz der azimutalen Schwingung des Resonanzrohres (9) angeregt wird.

5. Optoakustische Messanordnung nach Anspruch 4, **dadurch gekennzeichnet, dass** die beiden Mikrofone(3, 4) bidirektional ausgebildet sind, wobei die eine Seite ihrer Membran mit dem Innenraum des Resonanzrohres (9) verbunden ist und die andere Seite mit einem ausserhalb des Resonanzrohres (9) liegenden Raum, welcher keine oder nur wenig optoakustisch erzeugte Druckschwankungen enthält.

6. Optoakustische Messanordnung nach einem der Ansprüche 1 bis 5, **dadurch gekennzeichnet, dass** das Resonanzrohr mit einer ersten Lichtquelle (10) und einer zweiten Lichtquelle (11) bestückt ist, welche parallel zur Achse des Resonanzrohres (9) gerichtete Strahlung verschiedener Wellenlängen ausstrahlen, und dass die Strahlung der einen Lichtquelle bei der Position des Messmikrofons (3) und die Strahlung der anderen Lichtquelle 180° davon beabstandet verläuft.

7. Optoakustische Messanordnung nach Anspruch 6, **dadurch gekennzeichnet, dass** die erste Lichtquelle (10) Strahlung im Wellenlängenbereich von 200 bis 500 nm zum Nachweis von weissem und schwarzem Rauch und die zweite Lichtquelle (11) Strahlung im Wellenlängenbereich von 3.0 bis 4.8 $\mu$m zum Nachweis von brennbaren Substanzen oder gefährlichen Gasen emittiert, und dass die zweite Lichtquelle (1) bei der Position des Messmikrofons (3) angeordnet ist.

8. Optoakustische Messanordnung nach Anspruch 7, **dadurch gekennzeichnet, dass** zwei weitere Lichtquellen (12, 13) vorgesehen sind, und dass die zweite Lichtquelle Strahlung im Wellenlängenbereich von 3.0 bis 3.6 $\mu$m zum Nachweis von brennbaren Substanzen, die dritte Lichtquelle (12) Strahlung im Wellenlängenbereich von 4.18 bis 4.38 $\mu$m zum Nachweis von $CO_2$ und die vierte Lichtquelle (13) Strahlung im Wellenlängenbereich von 4.50 bis 4.85 $\mu$m zum Nachweis von CO emittiert.

9. Optoakustische Messanordnung nach Anspruch 8, **dadurch gekennzeichnet, dass** die Lichtquellen (10, 11, 12, 13) mit gleicher Frequenz zeitlich abwechselnd oder mit verschiedenen Frequenzen dauernd betrieben werden.

10. Optoakustische Messanordnung nach einem der Ansprüche 3 bis 9, **dadurch gekennzeichnet, dass** das Resonanzrohr (9) vertikal orientiert und an beiden Seiten offen ist.

11. Optoakustische Messanordnung nach Anspruch 10, **dadurch gekennzeichnet, dass** an jedem offenen Ende des Resonanzrohres (9) ein Schalldämpfer (18, 18') angeordnet ist.

12. Optoakustische Messanordnung nach Anspruch 11, **dadurch gekennzeichnet, dass** der oder die Schalldämpfer (18, 18') resonant oder nicht resonant arbeiten und Leitwände oder eine geeignete aerodynamische Form aufweisen, um die Umgebungsluft in das Resonanzrohr (9) zu leiten.

13. Optoakustische Messanordnung nach den Ansprüchen 5 und 11, **dadurch gekennzeichnet, dass** die andere Seite der Membran der Mikrofone (3, 4) mit dem Aussenraum über eine akustische Verbindung (19) verbunden ist, welche ausserhalb des Resonanzrohres (9) liegt und mit den Schalldämpfern (18, 18') verbunden ist.

14. Optoakustische Messanordnung nach einem der Ansprüche 1 bis 13, **gekennzeichnet durch** mindestens einen Temperaturfühler (20).

15. Optoakustische Messanordnung nach einem der Ansprüche 1 bis 14, **dadurch gekennzeichnet, dass** ein zusätzlicher Gassensor vorgesehen ist.

16. Optoakustische Messanordnung nach Anspruch 2, **dadurch gekennzeichnet, dass** die Messzelle durch ein mit einem Messmikrofon (3) bestücktes Messrohr (1) und die Referenzzelle durch ein mit einem Referenzmikrofon (4) bestücktes Referenzrohr (2) gebildet ist.

17. Optoakustische Messanordnung nach einem der Ansprüche 6 bis 16, **dadurch gekennzeichnet, dass** die Auswerteelektronik (16) zum unterputz Einbau in die Decke (14) eines zu überwachenden Raums vorgesehen und durch eine farblich an die Decke (14) anpassbare Abdeckplatte (15) nach unten abdeckbar ist, und dass das Resonanzrohr (9), die Lichtquellen (10, 11) und die Mikrofone (3, 4) von der Auswerteelektronik (16) getragen sind.

18. Optoakustische Messanordnung nach einem der Ansprüche 4 bis 12, **dadurch gekennzeichnet, dass** in der Auswerteelektronik (16) zur Elimination von Störsignalen das Signal des Referenzmikrofons (4) so lange variiert wird, bis ein minimales rms-Signal erhalten wird.

19. Optoakustische Messanordnung nach den Ansprüchen 13 und 17, **dadurch gekennzeichnet, dass** der oder die Schalldämpfer (18, 18') und die akustische Verbindung (19) aus transparentem Material hergestellt sind, und dass eine gehäuseartige Abdeckung (17) der Messanordnung (BM) aus transparentem Material vorgesehen ist.

FIG. 1

FIG. 2

FIG. 3

FIG. 4

FIG. 5

**Europäisches Patentamt**

## EUROPÄISCHER RECHERCHENBERICHT

Nummer der Anmeldung

EP 05 00 8349

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y,D | WO 02/31475 A (SIEMENS BUILDING TECHNOLOGIES AG; FORSTER, MARTIN; NEBIKER, PETER) 18. April 2002 (2002-04-18) <br> * Seiten 4-6; Abbildungen 1,2 * <br> ----- | 1-4, 6-10,14, 16,17 | G01N21/17 |
| Y | US 2004/179200 A1 (YOON CHANG-NO ET AL) 16. September 2004 (2004-09-16) <br><br> * Absätze [0021], [0022], [0032] * <br> ----- | 1-4, 6-10,14, 16,17 | |
| Y | ADAMS K M ET AL: "Real-time, in situ measurements of atmospheric optical absorption in the visible via photoacoustic spectroscopy - II. Validation for atmospheric elemental carbon aerosol" ATMOSPHERIC ENVIRONMENT, Bd. 23, Nr. 3, 1989, Seiten 693-700, XP009061208 * Zusammenfassung; Abbildung 1 * <br> ----- | 1,6-9,14 | |
| Y | ALEBIC-JURETIC A ET AL: "Photoacoustic study of airborne and model aerosols" REVIEW OF SCIENTIFIC INSTRUMENTS, AMERICAN INSTITUTE OF PHYSICS, US, Bd. 74, Nr. 1, Januar 2003 (2003-01), Seiten 503-505, XP012040286 ISSN: 0034-6748 * Zusammenfassung; Abbildung 2 * <br> ----- | 1-4, 6-10,16, 17 | **RECHERCHIERTE SACHGEBIETE (IPC)** <br><br> G01N |
| Y | PETZOLD A UND NIESSNER R: "Novel design of a resonant photoacoustic spectrophone for elemental carbon mass monitoring" APPL. PHYS. LETT., Bd. 66, Nr. 10, 6. März 1995 (1995-03-06), Seiten 1285-1287, XP000503665 * Abbildung 2 * <br> ----- <br> -/-- | 3,4,6-10 | |

Der vorliegende Recherchenbericht wurde für alle Patentansprüche erstellt

| Recherchenort | Abschlußdatum der Recherche | Prüfer |
|---|---|---|
| München | 7. Februar 2006 | Hoogen, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
    Dokument

EPO FORM 1503 03.82 (P04C03)

**Europäisches
Patentamt**

**EUROPÄISCHER RECHERCHENBERICHT**

Nummer der Anmeldung

EP 05 00 8349

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 5 753 797 A (FORSTER ET AL) 19. Mai 1998 (1998-05-19) * Spalte 4, Zeilen 38-49 * * Spalte 5, Zeilen 26-29; Abbildung 1 * ----- | 7,8,17 | |
| Y | US 4 457 162 A (RUSH ET AL) 3. Juli 1984 (1984-07-03) * Spalte 3, Zeilen 13-52; Abbildungen * ----- | 6-9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 7. Februar 2006 | Hoogen, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    .....................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 8349

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2006

| Im Recherchenbericht angeführtes Patentdokument | | Datum der Veröffentlichung | Mitglied(er) der Patentfamilie | | Datum der Veröffentlichung |
|---|---|---|---|---|---|
| WO 0231475 | A | 18-04-2002 | AU | 772018 B2 | 08-04-2004 |
| | | | AU | 8946401 A | 22-04-2002 |
| | | | CN | 1392952 A | 22-01-2003 |
| | | | CZ | 20021963 A3 | 13-11-2002 |
| | | | HU | 0204193 A2 | 28-03-2003 |
| | | | NO | 20022674 A | 24-07-2002 |
| | | | PL | 354646 A1 | 09-02-2004 |
| | | | US | 2003112019 A1 | 19-06-2003 |
| US 2004179200 | A1 | 16-09-2004 | CN | 1522363 A | 18-08-2004 |
| | | | EP | 1409991 A1 | 21-04-2004 |
| | | | JP | 2004533620 T | 04-11-2004 |
| | | | WO | 03002986 A1 | 09-01-2003 |
| | | | KR | 2003001892 A | 08-01-2003 |
| US 5753797 | A | 19-05-1998 | AT | 266861 T | 15-05-2004 |
| | | | CA | 2182319 A1 | 05-03-1997 |
| | | | DE | 59510901 D1 | 17-06-2004 |
| | | | DK | 760474 T3 | 20-09-2004 |
| | | | EP | 0760474 A1 | 05-03-1997 |
| | | | ES | 2221925 T3 | 16-01-2005 |
| | | | JP | 9127066 A | 16-05-1997 |
| | | | PT | 760474 T | 29-10-2004 |
| US 4457162 | A | 03-07-1984 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0231475 A

- EP 04023740 A

**In der Beschreibung aufgeführte Nicht-Patentliteratur**

- **C. F. DEWEY, JR.** Opto-acoustic Spectroscopy and Detection. Academic Press, 1977, 47-77

- **G. BUSSE ; D. HERBOECK.** Differential Helmholtz resonator as an opto-acoustic detector. *Applied Optics,* vol. 18 (23), 3959